# EUROPÄISCHE PATENTANMELDUNG

(11) **EP 0 607 623 A1**
(43) Veröffentlichungstag der Anmeldung: **27.07.1994**
(21) Anmeldenummer: 93121105.6
(22) Anmeldetag: 30.12.1993
(51) Int. Cl.: F16L 23/08, F01N 7/18, E04F 17/02, F23J 13/04

(54) **Steckverbindung für Rohre, insbesondere Kaminrohre**

(30) Priorität: 19.01.1993 CH 147/93
(71) Anmelder: Bartholet AG, CH-8620 Wetzikon ZH (CH); Müller Kamine AG, CH-3063 Ittigen (CH); Rutz & Co., CH-8153 Rümlang (CH)
(72) Erfinder: Rutz, Leo Paul, CH-8153 Rümlang (CH)
(74) Vertreter: Petschner, Goetz

(57) **Zusammenfassung**

Bei der Steckverbindung für Rohre, insbesondere Kaminrohre, weist das erste äussere Rohr (1) einen aufgebördelten, trichterförmigen Rand (2) auf, dessen innere Schrägflanke (3) an einem äusseren Ringwulst (5) des zweiten, inneren Rohres (6) anliegt, wobei ein ausgewölbter Wandungsteil (7) eines bridenartigen Ringbandes (8) den Ringwulst (5) des inneren Rohres (6) mit anliegendem Bördelrand (2) des äusseren Rohres (1) wenigstens teilweise formschlüssig umgibt, derart, dass der Bördelrand (2) durch Zusammenziehen des bridenartigen Ringbandes (8) zur axial festverbindenden Anlage am Ringwulst (5) kommt.

## Beschreibung

Die vorliegende Erfindung betrifft eine Steckverbindung für Rohre, insbesondere Kaminrohre, bei welcher mindestens das eine Ende eines ersten Rohres zum steckbaren Uebergreifen eines der Enden eines zweiten Rohres ausgebildet ist, wobei Mittel vorgesehen sind, welche die zusammengesteckten Rohre zusammenhalten.

Bisher ist es im Kamin- und Abgasleitungsbau üblich, die heute verwendeten Chromstahlrohre auf der Baustelle miteinander zu verschweissen. Dabei hängt insbesondere die Dichtheit von der Präzision der Schweissnaht ab, was praktisch immer zu Rügen Anlass gibt. Zudem ist das Verschweissen von Rohren äusserst zeitaufwendig.

Es ist deshalb Aufgabe der vorliegenden Erfindung, eine Steckverbindung für Rohre im Kamin- und Abgasleitungsbau der vorgenannten Art zu schaffen, durch welche ein Verschweissen von Rohrteilen auf Baustellen eliminiert und eine dichte, kondensatresistente Verbindung gewährleistet werden kann unter Erfüllung aller Ansprüche der Luftreinhalteverordnung (LRV).

Dies wird erfindungsgemäss zunächst dadurch erreicht, dass das erste, äussere Rohr einen aufgebördelten, trichterförmigen Rand aufweist, dessen innere Schrägflanke an einem äusseren Ringflansch oder Ringwulst des zweiten, inneren Rohres anliegt, wobei ein ausgewölbter Wandungsteil eines bridenartigen Ringbandes den Ringflansch oder den Ringwulst des inneren Rohres mit anliegendem Bördelrand des äusseren Rohres wenigstens teilweise formschlüssig umgibt, derart, dass der Bördelrand durch Zusammenziehen des bridenartigen Ringbandes zur axial festverbindenden Anlage am Ringflansch oder Ringwulst kommt.

Um dabei gerade Rohre verwenden zu können, ist es von Vorteil, wenn der Ringflansch auf der äusseren Mantelfläche des inneren Rohres durch Verschraubung fixiert ist, wobei der Ringflansch rechteckigen oder trapezförmigen Querschnitt aufweist.

Andrerseits ist es möglich, dass der Ringwulst im Mantel des inneren Rohres ausgeformt ist und einen wenigstens angenähert trapezförmigen Querschnitt aufweist.

Ferner besteht eine vorteilhafte Ausgestaltung darin, dass das bridenartige Ringband sich an seinen Enden überlappt und über Schraubenmittel durchmesservermindernd zusammenziehbar ist.

Eine weitere vorteilhafte Ausgestaltung der Erfindung besteht darin, dass das äussere Rohr einer, von seinem aufgebördelten Rand distanzierten ausgeformten Ringwulst umfasst zur inneren Aufnahme einer O-förmigen Lippendichtung oder Keramikdichtung, was zu einer optimalen Dichtheit führt, nachdem Dichtheit bereits durch den Diffusionsspalt zwischen den ineinandergesteckten und sich mit äusserer resp. innerer Mantelfläche berührenden Rohren besteht. Zudem besteht weitere Dichtheit zwischen den aneinanderliegenden Schrägflächen von Ringflansch resp. Ringwulst und aufgebördeltem Rand der zusammengesteckten Rohre.

Weiter kann vorgesehen sein, dass das äussere Rohr in seinem Aufnahmebereich für das innere Rohr aufgeweitet ist und eine innere Ringschulter aufweist, an der sich der Rand des inneren Rohres abstützt.

Eine erfindungswesentliche Ausgestaltung besteht ferner darin, dass das äussere Rohr eine Muffe ist, wobei dann vorteilhaft die Muffe symmetrisch ausgebildet ist zur steckbaren Aufnahme von zwei zu verbindenden inneren Rohren.

Beispielsweise Ausführungsformen des Erfindungsgegenstandes sind nachfolgend anhand der Zeichnung näher erläutert. Es zeigen:
- Fig. 1: in schematischer Darstellung und teilweise im Schnitt eine erfindungsgemässe Steckverbindung zweier Rohre mittels Muffe;
- Fig. 2: ein bridenartiges Ringband der Verbindung gemäss Fig. 1, in Draufsicht; und
- Fig. 3: im Querschnitt eine weitere Ausführungsform der Steckverbindung eines inneren und eines äusseren Rohres.

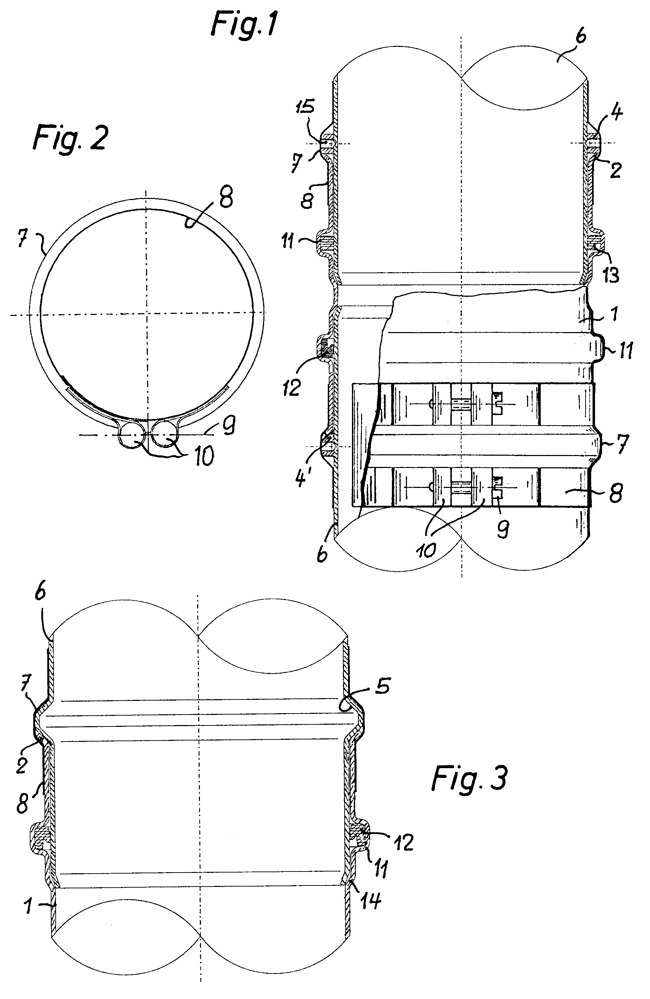

Gemäss den Darstellungen umfasst die Steckverbindung ein erstes, äusseren Rohr 1, welches einen aufgebördelten, trichterförmigen Rand 2 aufweist, dessen innere Schrägfläche 3 an einem äusseren Ringflansch 4 (Fig. 1) oder an einem Ringwulst 5 eines zweiten, inneren Rohres 6 (Fig. 3) anliegt.

Hierbei ist erfindungswesentlich, dass ein ausgewölbter Wandungsteil 7 eines bridenartigen Ringbandes 8 den Ringflansch 4 oder den Ringwulst 5 des inneren Rohres 6 mit anliegendem Bördelrand 2 des äusseren Rohres 1 wenigstens teilweise formschlüssig umgibt, derart, dass der Bördelrand 2 durch Zusammenziehen des bridenartigen Ringbandes 8 zur axial festverbindenden Anlage am Ringflansch 4 oder Ringwulst 5 kommt.

Hierfür überlappt sich das bridenartige Ringband 8 an seinen Bandenden und ist über Schraubenmittel 9,10 durchmesservermindernd zusammenziehbar, wie das insbesondere die Fig. 1 und 2 erkennen lassen.

Für glatte Rohre wird der Ringflansch 4 auf der äusseren Mantelfläche des inneren Rohres 6 mittels Schrauben 15 fixiert. Wie dabei Fig. 1 zeigt, hat der Ringflansch 4 hier rechteckigen Querschnitt, kann aber auch, wie an der Stelle 4' gezeigt, trapezförmig resp. teilweise trapezförmig ausgebildet sein, um eine optimal dichte Anlage der Schrägflanke 3 des aufgebördelten Randes 2 des äusseren Rohres 1 zu erzielen.

Im verbleibenden Ringspalt zwischen Bride 8, Ringflansch 4 und aufgebördeltem Rand 2 des äusseren Rohres 1 kann eine weitere O-Dichtung vorgesehen sein.

Bei der Anordnung gemäss Fig. 3 ist anstelle des Ringflansches 4 ein Ringwulst 5 vorgesehen, der im Mantel des inneren Rohres 6 ausgeformt ist und einen wenigstens angenähert trapezförmigen Querschnitt aufweist.

Dies bedeutet aber eine Vorbehandlung der so zusammenzufügenden Rohrabschnitte. Hierbei kann das betreffende äussere Rohr 1 in seinem Aufnahmebereich für das innere Rohr 6 aufgeweitet sein und eine innere Ringschulter 14 aufweisen, an der sich der Rand des inneren Rohres 6 abstützt. In dieser Form bildet das äussere Rohr 1 eine Muffe.

Zudem kann dann das äussere Rohr 1 einen weiteren, von seinem aufgebördelten Rand 2 distanzierten ausgeformten Ringwulst 11 umfassen zur inneren Aufnahme einer O-förmigen Lippendichtung 12 oder Keramikdichtung 13.

Wie Fig. 1 erkennen lässt, kann das äussere Rohr 1 als symmetrische Muffe ausgebildet sein zur Aufnahme von zwei zu verbindenden inneren Rohren 6. Werden dann noch Ringflansche 4 verwendet, können beliebige glatte Rohrabschnitte in beliebiger Zahl mittels jeweils einer Doppelmuffe zwischen zwei Rohren und jeweils zwei bridenartigen Ringbändern 8 zusammengefügt werden.

Somit ist mit den Massnahmen der vorstehenden Erfindung eine Steckverbindung geschaffen, die eine schnelle, einfache, aber absolut dichte Erstellung von Kaminen oder Abgasleitungen gewährleistet.

## Patentansprüche

1. Steckverbindung für Rohre, insbesondere Kaminrohre, bei welcher mindestens das eine Ende eines ersten Rohres zum steckbaren Uebergreifen eines der Enden eines zweiten Rohres ausgebildet ist, wobei Mittel vorgesehen sind, welche die zusammengesteckten Rohre zusammenhalten, dadurch gekennzeichnet, dass das erste, äussere Rohr (1) einen aufgebördelten, trichterförmigen Rand (2) aufweist, dessen innere Schrägflanke (3) an einem äusseren Ringflansch (4) oder Ringwulst (5) des zweiten, inneren Rohres (6) anliegt, wobei ein ausgewölbter Wandungsteil (7) eines bridenartigen Ringbandes (8) den Ringflansch (4) oder den Ringwulst (5) des inneren Rohres (6) mit anliegendem Bördelrand (2) des äusseren Rohres (1) wenigstens teilweise formschlüssig umgibt, derart, dass der Bördelrand (2) durch Zusammenziehen des bridenartigen Ringbandes (8) zur axial festverbindenden Anlage am Ringflansch (4) oder Ringwulst (5) kommt.

2. Steckverbindung nach Anspruch 1, dadurch gekennzeichnet, dass der Ringflansch (4) auf der äusseren Mantelfläche des inneren Rohres (6) durch Verschraubung fixiert ist.

3. Steckverbindung nach Anspruch 1, dadurch gekennzeichnet, dass der Ringflansch (4) rechteckigen oder trapezförmigen Querschnitt aufweist.

4. Steckverbindung nach Anspruch 1, dadurch gekennzeichnet, dass der Ringwulst (5) im Mantel des inneren Rohres (6) ausgeformt ist und einen wenigstens angenähert trapezförmigen Querschnitt aufweist (Fig. 3).

5. Steckverbindung nach Anspruch 1, dadurch gekennzeichnet, dass das bridenartige Ringband (8) sich an seinen Enden überlappt und über Schraubenmittel (9,10) durchmesservermindernd zusamenziehbar ist.

6. Steckverbindung nach Anspruch 1, dadurch gekennzeichnet, dass das äussere Rohr (1) einen, von seinem aufgebördelten Rand (2) distanzierten ausgeformten Ringwulst (11) umfasst zur inneren Aufnahme einer O-förmigen Lippendichtung (12) oder Keramikdichtung (13).

7. Steckverbindung nach Anspruch 6, dadurch gekennzeichnet, dass das äussere Rohr (1) in seinem Aufnahmebereich für das innere Rohr (6) aufgeweitet ist und eine innere Ringschulter (14) aufweist, an der sich der Rand des inneren Rohres (6) abstützt.

8. Steckverbindung nach Anspruch 1, dadurch gekennzeichnet, dass das äussere Rohr (1) eine Muffe ist.

9. Steckverbindung nach Anspruch 8, dadurch gekennzeichnet, dass die Muffe (1) symmetrisch ausgebildet ist zur steckbaren Aufnahme von zwei zu verbindenden inneren Rohren (6).
